# EUROPEAN PATENT SPECIFICATION

(11) **EP 1 512 333 B1**
(45) Date of publication and mention of the grant of the patent: **29.04.2009**
(21) Application number: 04425657.6
(22) Date of filing: 01.09.2004
(51) Int. Cl.: A23N 12/00

(54) **Apparatus for manual loading and unloading of the basket of a centrifugal machine for drying various products, particularly loose vegetables**
Vorrichtung zum manuellen Be- und Entladen eines Behälters einer Zentrifuge zum Trocknen von unterschiedlichen Produkten, insbesondere von Gemüse in Stückform
Dispositif pour chargement et déchargement manuel d'un panier d'une centrifugeuse pour sécher des differents produits, en particulier des légumes en vrac

(30) Priority: 03.09.2003 IT RM20030414
(43) Date of publication of application: 09.03.2005
(73) Proprietor: Turatti s.r.l., 30014 Cavarzere (VE) (IT)
(72) Inventor: Turatti, Antonio, 30014 Cavarzere (VE) (IT)
(74) Representative: Iannone, Carlo Luigi

(56) References cited:
- EP-A- 0 249 568
- FR-A- 2 608 463
- US-A- 4 090 310
- US-A- 4 593 479

## Description

The present invention relates to an apparatus for manual loading and unloading of the basket of a centrifugal machine for drying various products, particularly loose vegetables.

More specifically, the invention concerns a device of the above kind allowing to make easier for the operator the loading and unloading operations in a centrifugal machine suitable to dry various products, particularly loose vegetables, according to semiautomatic discontinuous operation.

At present, semiautomatic centrifugal machines available on the market provide a basket support structure, a rotating platform on which the basket is positioned, a motor driving the rotating platform, and a manual lifting lid and a control panel, such an apparatus is known from EP-A-0 249 568.

Known semiautomatic centrifugal machines provide a machine body, a basket rotation motor, a rotating basket, within which the product to be dried is introduced, a closure lid, a rotating plane, a lid closure stop, an electric board, to control the adjustment of the centrifugation time, motor supply, running, stopping and intrinsic safety of the machine.

Operator of the above semiautomatic centrifugal machine manually lifts the lid, introducing the basket, within which it has been already introduced the product to be introduced. Loading of the basket is uncomfortable, due to the different height of the top feeding opening and of the rotating platform. Operation of introducing the basket involves a remarkable waste of energy.

Once the basket has been properly placed, operator manually closes the lid. Stop device recognises the closure of the lid and allows the start of the machine, said operation occurring by a command from the operator. The same stop device cuts off the electric motor supply.

If by chance the operator opens the lid during the operation of the centrifugal machine, motor stops rotating the platform, but the basket still rotates for some moments due to its own inertia.

In view of the above, it is suggested the solution according to the present invention, aiming to solve the above mentioned problems, providing an apparatus allowing to manually loading and unloading products within a semiautomatic centrifugal machine.

It is therefore specific object of the present invention an apparatus for manual loading and unloading of the basket of a centrifugal machine for drying various products, particularly loose vegetables, said centrifugal machine providing a machine body, a rotating basket containing the products to be dried, and a machine control board, said loading and unloading apparatus being characterised in that it provides cover means for the rotating basket, support means for said rotating basket, and mechanical means for lifting said rotating basket support means, and means for opening said cover means during the lifting of said rotating basket.

Preferably, according to the invention, stop means for the opening of said rotating basket cover means are provided.

Always according to the invention, said rotating basket support means can be comprised of a semicircular fork, allowing the rotation of the basket.

Further, according to the invention, said mechanical means for lifting the rotating basket support means can be comprised of cylinder mechanical means, provided with guide means.

Still according to the invention, said rotating basket cover means can be comprised of a lid laterally hinged to the rotating basket.

Always according to the invention, said rotating basket cover means can be comprised of a slidable belt.

The present invention will be now described, for illustrative but not limitative purposes, according to its preferred embodiments, with particular reference to the figures of the enclosed drawings, wherein:
figure 1 schematically shows a centrifugal machine with a first embodiment of the apparatus according to the invention;
figure is a lateral view of the apparatus of figure 1;
figure 3 is a first lateral view of a centrifugal machine with a second embodiment of the apparatus according to the invention;
figure 4 is a top view of the apparatus of figure 3;
figure 5 is a second lateral view of the apparatus of figure 3 according a second arrangement; and
figure 6 is a top view of the apparatus of figure 5.

Semiautomatic centrifugal machine shown in the enclosed drawings provides a body machine 1, a basket rotation motor 2, a rotating basket 3, within which the product to be dried is introduced, a closure lid 4, a rotating plane 5, a stop 6 for the closure of the lid 4, an electric board 7, controlling the adjustment of the centrifugation time, the rotation speed, the motor supply, the running, stop and intrinsic safety of the machine.

The solution according to the invention, that will be described in greater detail in the following, aims to make it easier the loading and unloading conditions of the basket 3. Said result is obtained by a fork device 8, having a semicircular shape, that, by a mechanical device 9 (in the case shown a cylinder) lifts the basket 3 at the end of the drying cycle, bringing it at a most suitable height for loading and unloading the following basket 3 by the operator.

At the upper end of the lifting cylinder 9 a mechanical strike 10 is provided, said strike 10 opening the lid 4.

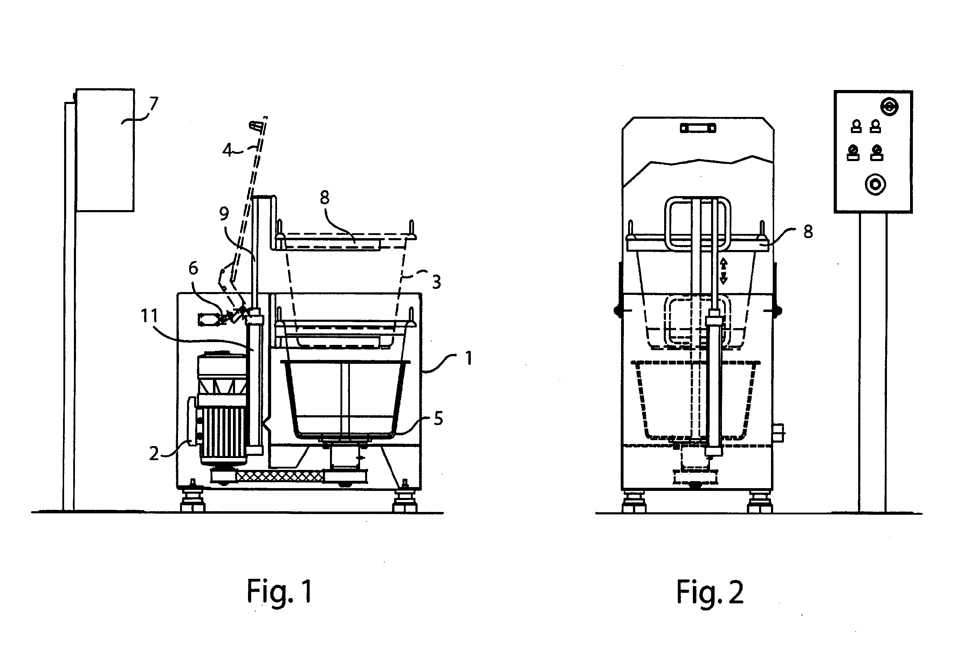

As it is clear from figure 2, device according to the invention, housed within the machine body 1, comprises a fork 8 hooking the basket 3, the semicircular shape of which allows the rotation of the basket 3 when the fork 8 is in the rest point.

As already said, it is further provided a lifting mechanical device or lifting cylinder 9 for the fork 8, by which the fork 8 is lifted up to enter into the lower part of the edge of the basket 3, thus beginning the lifting operation.

Lifting of the fork 8 occurs along the cylindrical guide 11, provided in order to avoid warping of the apparatus.

At the end of the drying cycle of the centrifugal machine, basket 3 stops its rotation and begins the lifting by the apparatus according to the invention, at the same time causing the opening of the lid 4.

Basket 3 is now in a better position to carry out the loading and unloading operations.

Once terminated these two operations, operator gives his consent to the start of the cycle. Basket 3 lowers and lid 4 automatically closes. Once reached the working position, the centrifugation phase starts.

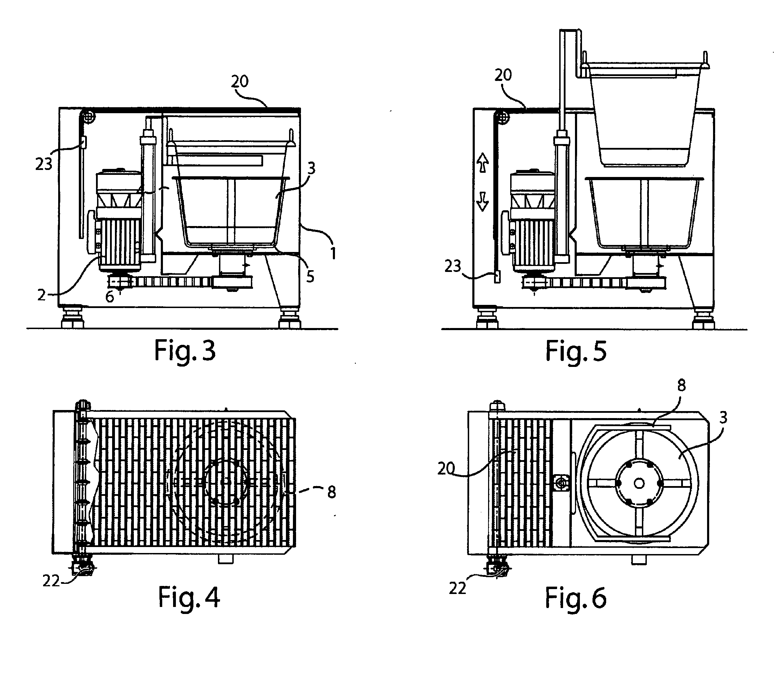

Coming now to observe figures 3 - 6, it is shown a second embodiment of the device according to the invention. When describing this embodiment, the same reference numbers will be used to indicate the parts corresponding to the previous embodiment described with reference to figures 1 and 2.

In this case, it is provided a closure belt 21, provided with a driving motor 22, having the necessary shafts and pulleys for driving the same belt 21, and the necessary sliding guides, with a stop 23.

In this case, belt 21 is driven by the motor 22 controlling the opening or the closure according to the working phases, by controls inputted by the machine electric board 7.

By the device according to the invention it is possible to work with a batch centrifugal machine under the best operative conditions for the operator.

Furthermore, by the above solution, safety conditions for the operator when opening and closing the lid are improved.
The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Apparatus for manual loading and unloading of the basket of a centrifugal machine for drying various products, particularly loose vegetables, said centrifugal machine providing a machine body (1), a rotating basket (3) containing the products to be dried, and a machine control board, said loading and unloading apparatus being **characterised in that** it provides cover means (4) for the rotating basket, support means (8) for said rotating basket, and mechanical means (9) for lifting said rotating basket support means, and means for opening (10) said cover means during the lifting of said rotating basket.

2. Apparatus for manual loading and unloading of the basket of a centrifugal machine for drying various products, particularly loose vegetables according to claim 1, **characterised in that** stop means for the opening of said rotating basket cover means are provided.

3. Apparatus for manual loading and unloading of the basket of a centrifugal machine for drying various products, particularly loose vegetables according to one of the preceding claims, **characterised in that** said rotating basket support means are comprised of a fork (8).

4. Apparatus for manual loading and unloading of the basket of a centrifugal machine for drying various products, particularly loose vegetables according to claim 3, **characterised in that** said fork (8) has a semicircular shape.

5. Apparatus for manual loading and unloading of the basket of a centrifugal machine for drying various products, particularly loose vegetables according to one of the preceding claims, **characterised in that** said mechanical means (9) for lifting the rotating basket support means are comprised of cylinder mechanical means, provided with guide means.

6. Apparatus for manual loading and unloading of the basket of a centrifugal machine for drying various products, particularly loose vegetables according to one of the preceding claims, **characterised in that** said rotating basket cover means (4) are comprised of a lid laterally hinged to the rotating basket.

7. Apparatus for manual loading and unloading of the basket of a centrifugal machine for drying various products, particularly loose vegetables according to one of the preceding claims, **characterised in that** said rotating basket cover means are comprised of a slidable belt (21).

## Patentansprüche

1. Vorrichtung zum manuellen Beladen und Entladen des Korbs einer Zentrifugiermaschine zum Trocknen verschiedener Produkte, insbesondere loser Gemüse, wobei die Zentrifugiermaschine einen Maschinenkörper (1), einen die zu trocknenden Produkte enthaltenden rotierenden Korb (3) und eine Maschinensteuerbaugruppe vorsieht, wobei die Maschine zum Beladen und Entladen **dadurch gekennzeichnet ist, dass** sie Abdeckmittel (4) für den rotierenden Korb, Haltemittel (8) für den rotierenden Korb und mechanische Mittel (9) zum Anheben der Haltemittel des rotierenden Korbs vorsieht sowie Mittel zum Öffnen (10) der Abdeckmittel während des Anhebens des rotierenden Korbs.

2. Vorrichtung zum manuellen Beladen und Entladen des Korbs einer Zentrifugiermaschine zum Trocknen verschiedener Produkte, insbesondere loser Gemüse, entsprechend Anspruch 1, **dadurch gekennzeichnet, dass** Anschlagmittel zum Öffnen der Abdeckmittel des rotierenden Korbs vorgesehen sind.

3. Vorrichtung zum manuellen Beladen und Entladen des Korbs einer Zentrifugiermaschine zum Trocknen verschiedener Produkte, insbesondere loser Gemüse, entsprechend einem der vorangehenden Ansprüche, **dadurch gekennzeichnet, dass** die Haltemittel des rotierenden Korbs aus einer Gabel (8) bestehen.

4. Vorrichtung zum manuellen Beladen und Entladen des Korbs einer Zentrifugiermaschine zum Trocknen verschiedener Produkte, insbesondere loser Gemüse, entsprechend Anspruch 3, **dadurch gekennzeichnet, dass** die Gabel (8) eine halbrunde Form aufweist.

5. Vorrichtung zum manuellen Beladen und Entladen des Korbs einer Zentrifugiermaschine zum Trocknen verschiedener Produkte, insbesondere loser Gemüse, entsprechend einem der vorangehenden Ansprüche, **dadurch gekennzeichnet, dass** die mechanischen Mittel (9) zum Anheben der Haltemittel des rotierenden Korbs aus mechanischen Zylindermitteln bestehen, die mit Führungsmitteln versehen sind.

6. Vorrichtung zum manuellen Beladen und Entladen des Korbs einer Zentrifugiermaschine zum Trocknen verschiedener Produkte, insbesondere loser Gemüse, entsprechend einem der vorangehenden Ansprüche, **dadurch gekennzeichnet, dass** die Abdeckmittel (4) des rotierenden Korbs aus einem Deckel bestehen, der seitlich an dem rotierenden Korb angelenkt ist.

7. Vorrichtung zum manuellen Beladen und Entladen des Korbs einer Zentrifugiermaschine zum Trocknen verschiedener Produkte, insbesondere loser Gemüse, entsprechend einem der vorangehenden Ansprüche, **dadurch gekennzeichnet, dass** die Abdeckmittel des rotierenden Korbs aus einem verschiebbaren Band (21) bestehen.

## Revendications

1. Appareil pour le chargement et le déchargement manuels du panier d'une centrifugeuse pour le séchage de divers produits, en particulier des légumes en vrac, ladite centrifugeuse comprenant un corps de machine (1), un panier tournant (3) contenant les produits à sécher, et un tableau de commande de machine, ledit appareil pour le chargement et le déchargement étant **caractérisé en ce qu'**il comprend des moyens formant couvercle (4) pour le panier tournant, des moyens de support (8) pour ledit panier tournant, et des moyens mécaniques (9) pour soulever lesdits moyens de support du panier tournant, et des moyens (10) pour ouvrir lesdits moyens formant couvercle pendant que ledit panier tournant est soulevé.

2. Appareil pour le chargement et le déchargement manuels du panier d'une centrifugeuse pour le séchage de divers produits, en particulier des légumes en vrac, selon la revendication 1, **caractérisé en ce qu'**il est prévu des moyens de butée pour l'ouverture desdits moyens formant couvercle du panier tournant.

3. Appareil pour le chargement et le déchargement manuels du panier d'une centrifugeuse pour le séchage de divers produits, en particulier des légumes en vrac, selon l'une quelconque des revendications précédentes, **caractérisé en ce que** lesdits moyens de support du panier tournant sont constitués d'une fourche (8).

4. Appareil pour le chargement et le déchargement manuels du panier d'une centrifugeuse pour le séchage de divers produits, en particulier des légumes en vrac, selon la revendication 3, **caractérisé en ce que** ladite fourche (8) a une forme semi-circulaire.

5. Appareil pour le chargement et le déchargement manuels du panier d'une centrifugeuse pour le séchage de divers produits, en particulier des légumes en vrac, selon l'une quelconque des revendications précédentes, **caractérisé en ce que** lesdits moyens mécaniques (9) pour soulever les moyens de support du panier tournant sont constitués de moyens mécaniques cylindriques, pourvus de moyens de guidage.

6. Appareil pour le chargement et le déchargement manuels du panier d'une centrifugeuse pour le séchage de divers produits, en particulier des légumes en vrac, selon l'une quelconque des revendications précédentes, **caractérisé en ce que** lesdits moyens formant couvercle du panier tournant (4) sont constitués d'un capot articulé latéralement sur le panier tournant.

7. Appareil pour le chargement et le déchargement manuels du panier d'une centrifugeuse pour le séchage de divers produits, en particulier des légumes en vrac, selon l'une quelconque des revendications précédentes, **caractérisé en ce que** lesdits moyens formant couvercle du panier tournant sont constitués d'un tapis coulissant (21).
